# FASCICULE DE BREVET EUROPEEN

(11) **EP 0 374 003 B1**
(45) Date de publication et mention de la délivrance du brevet: **19.05.1993**
(21) Numéro de dépôt: 89403375.2
(22) Date de dépôt: 06.12.1989
(51) Int. Cl.: F01D 21/00, F01D 21/04

(54) **Turbomachine comportant un dispositif de freinage entre rotor de turbine et carter d'échappement**
Turbomaschine mit einer Bremseinrichtung zwischen Turbinenrotor und Auslassgehäuse
Turbo machine with a braking device between rotor and exhaust sump

(30) Priorité: 15.12.1988 FR 8816524
(43) Date de publication de la demande: 20.06.1990
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Berneuil, Yves Roger Jean, F-75010 Paris (FR); Delrieu, Gilles Lucien Eugène, F-91230 Montgeron (FR)
(74) Mandataire: Moinat, François

(56) Documents cités:
- FR-A- 2 131 797
- FR-A- 2 309 725
- FR-A- 2 560 293
- GB-A- 872 654
- GB-A- 2 128 686
- US-A- 2 966 333
- US-A- 2 987 296

## Description

L'invention concerne une turbine de turbomachine comportant un dispositif de freinage assurant la maîtrise de la vitesse de rotation de la turbine, notamment en cas de rupture de l'arbre de liaison entre turbine et compresseur.

On connaît par FR-A-2 052 055 et FR-A-2 181 529 une solution apportée aux problèmes soulevés par la mise en autorotation d'un rotor de turboréacteur en cas de panne du turboréacteur. Cette solution permettant l'immobilisation du rotor ne prévoît pas de freinage mécanique mais au contraire, utilise le dispositif de déviation du jet ou de reverse associé au turboréacteur pour arrêter le flux d'air qui entraînerait le rotor.

Un problème voisin est posé par la rupture accidentelle d'un arbre assurant la liaison entre un compresseur et une turbine de turbomachine. Il en résulte en effet, si des mesures appropriées ne sont pas prises, un passage du rotor de turbine en survitesse, avec les risques corrélatifs d'éclatement du rotor entraînant la détérioration des structures avoisinantes et des conséquences souvent catastrophiques. FR-A-2 131 797 envisage une solution à ce problème associée à des dispositions particulières de montage d'un ensemble tournant de turbomachine comportant un palier de butée placé près de la turbine. Ces dispositions provoquent, en cas de rupture de l'arbre portant la turbine, un frottement des pales du rotor de turbine contre l'aubage fixe du stator. Malgré une destruction des aubes, des dégats plus importants et leurs conséquences seraient ainsi évités.

De manière similaire, GB-A-2.128.686 décrit des dispositions de turbine selon lesquelles les aubes de rotor en cas de rupture de l'arbre sont détruites par le contact avec les segments d'aubages fixes de stator, les deux étages successifs portant en outre des éléments coniques venant en contact en vue de provoquer le basculement des segments statoriques.

On connaît en outre par GB-A-872.654 un dispositif de freinage de secours pour une turbine. Ce dispositif monté sur le boîtier de roulement du palier support est associé au dispositif principal placé de l'autre côté de la roue de turbine et intervient en cas de rupture.

L'invention vise à apporter une solution améliorée à ces problèmes, notamment pour des applications où la mise en oeuvre des solutions antérieures connues se heurte à de sérieuses difficultés ou à des impossibilités, tout en réduisant également l'importance de parties endommagées et notamment en évitant une destruction des aubes, en garantissant cependant l'efficacité du freinage du rotor de turbine et en facilitant les opérations de remise en bon état faisant suite à un accident, cette solution restant simple de mise en oeuvre et n'alourdissant pas exagérément le matériel, ce qui est un critère important, notamment pour les applications aéronautiques visées par l'invention.

Une turbomachine répondant à ces conditions est caractérisée en ce que le rotor de turbine comporte à son extrémité aval une virole conique et en ce que le carter d'échappement porte du côté amont un élément structural de forme générale conique, fixé sur des bras radiaux dudit carter, les parties coniques correspondantes de ladite virole du rotor de turbine et dudit élément structural du carter d'échappement entrant en contact, en cas de rupture de l'arbre de turbine, de manière à freiner la turbine.

D'autres caractéristiques et avantages de l'invention seront mieux compris à la lecture de la description qui va suivre de deux modes de réalisation de l'invention, en référence aux dessins annexés sur lesquels :
- la figure 1 représente une vue schématique générale d'une turbomachine comportant un dispositif de freinage de turbine conforme à l'invention, représenté par un arraché, vue en coupe longitudinale par un plan passant par l'axe de rotation de la turbomachine ;
- la figure 2 montre un détail agrandi, selon un premier mode de réalisation de l'invention, du dispositif de freinage de turbine représenté sur la figure 1 ;
- la figure 3 montre un détail agrandi, selon un deuxième mode de réalisation de l'invention, du dispositif de freinage de turbine représenté sur la figure 1.

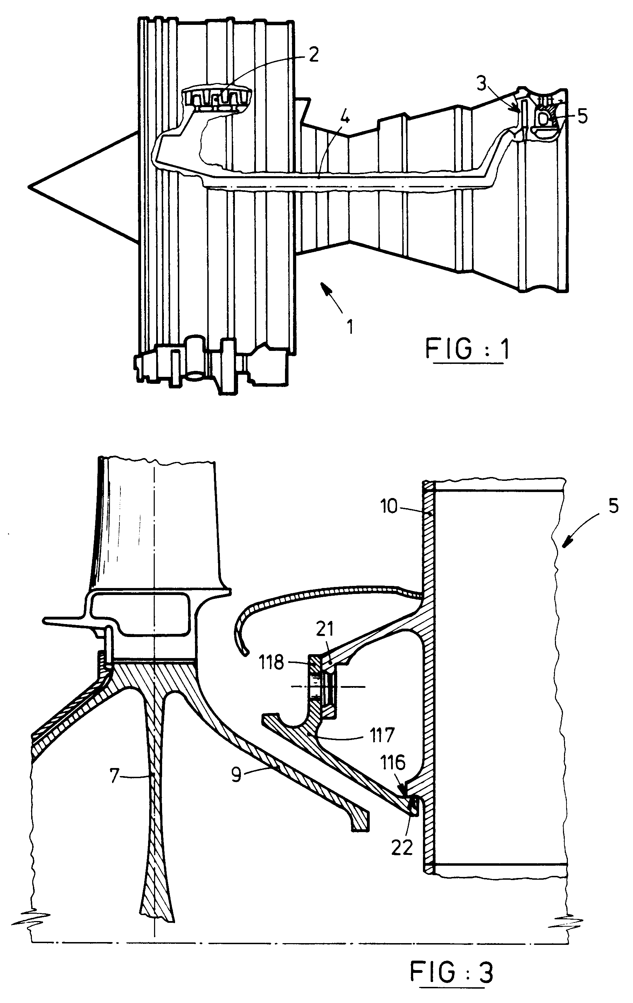

La turbomachine 1 représentée schématiquement à la figure 1 comporte notamment un compresseur 2 et une turbine 3 reliés par au moins un arbre 4 et un carter d'échappement 5, en sortie de turbine.

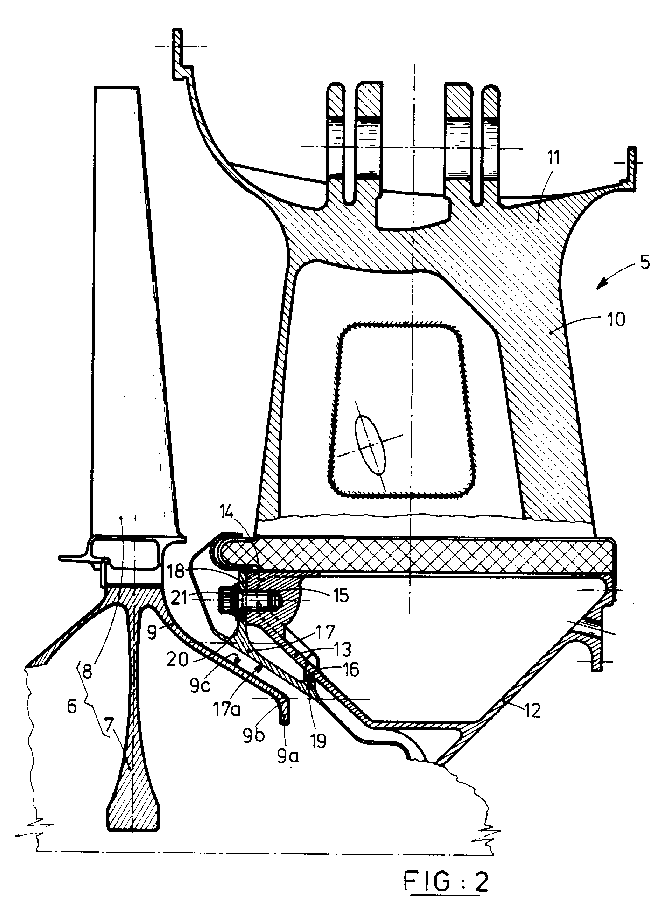

Comme représenté plus en détail sur la figure 2, selon un premier mode de réalisation de l'invention, la turbine 3 comporte au moins un dernier étage 6 aval de rotor constitué d'un disque 7 de rotor portant des aubes mobiles 8. Côté aval, le disque 7 est prolongé de manière remarquable, conforme à l'invention, par une virole 9 de forme générale conique dont l'extrémité aval terminée par un rebord 9a formant bride est libre, dans les conditions normales de fonctionnement de la turbomachine qui correspondent à la représentation de la figure 2. Le carter d'échappement 5 est constitué, comme cela est connu en soi, d'une pluralité de bras radiaux 10 reliant une enveloppe externe 11 de carter et un moyeu interne 12 de carter. Ledit moyeu 12 comporte une pièce amont 13 formant une bride annulaire 14 munie de trous taraudés 15 régulièrement répartis et portant à mi-hauteur une portée cylindrique 16. Sur ledit moyeu 12 de carter, est monté, côté amont, un élément structural 17 de forme générale conique, comportant, à son extrémité amont, une bride radiale 18 et, du côté aval, une portée cylindrique 19. Ladite bride 18 de l'élément structural 17 comportant des perçages 20, régulièrement répartis, est fixée, au moyen de vis 21, dans l'exemple de réalisation montré sur la figure 2, sur la bride 14 du moyeu 12 de carter. La portée cylindrique 19 de l'élément structural 17 vient en appui sur la portée cylindrique 16 du moyeu 12 de carter. L'angle au sommet du cône formé par la virole 9 du disque de turbine est inférieur de quelques degrés à l'angle au sommet du cône formé par l'élément structural 17 de moyeu de carter.

En cas de rupture de l'arbre 4, le rotor de turbine se déplace vers l'aval et l'extrémité aval 9b de la partie conique de la virole 9 entre en contact avec l'élément structural 17 de carter. La virole 9 a par conséquent tendance à fléchir à son extrémité aval et sa surface extérieure 9c glisse sur la surface intérieure 17a de l'élément structural conique 17, produisant un effet de coin et un emmanchement conique serré entre les deux pièces, résultant en une immobilisation du rotor de turbine.

Pour faciliter ce résultat, tout en évitant des répercussions trop importantes sur les structures voisines ou liées, lesdites surfaces 9c de la virole et 17a de l'élément structural qui viennent en contact peuvent comporter un revêtement présentant de bonnes propriétés de résistance en frottement, à haute température. Ce revêtement est notamment à base de carbone et peut être constitué d'un dépôt de type céramique ou d'un matériau composite à fibres longues.

Selon un deuxième mode de réalisation de l'invention, représenté sur la figure 3, on retrouve les éléments précédemment décrits, en référence à la figure 2, le rotor de turbine comportant le disque 7 et la virole conique 9, le carter d'échappement 5 et ses bras radiaux 10.

Le mode de fixation de l'élément structural conique 117 audit carter 5 présente quelques variantes de réalisation. La bride radiale 118 dudit élément 117 est maintenant fixée sur une bride 21 qui est solidaire de la face amont des bras 10 de carter et la portée cylindrique 116 de l'élément 117 est en appui sur une portée cylindrique 22 qui est également portée par la face amont des bras 10 de carter. Le freinage et le blocage du rotor de turbine, en cas de rupture de l'arbre sont obtenus de manière identique au premier mode de réalisation, décrit précédemment en référence à la figure 2, par contact et emmanchement conique serré entre la virole conique 9 de rotor et l'élément structural 117 de carter.

## Revendications

1. Turbomachine comportant notamment un compresseur (2) et une turbine (3) dont les rotors sont portés par un arbre commun (4) et un carter d'échappement (5) en sortie de turbine caractérisée en ce que le rotor de turbine comporte à son extrémité aval une virole conique (9) et en ce que le carter d'échappement (5) porte du côté amont un élément structural (17 ; 117) de forme générale conique, fixé sur des bras radiaux (10) dudit carter (5), les parties coniques correspondantes de ladite virole (9) du rotor de turbine et dudit élément structural (17 ; 117) du carter d'échappement entrant en contact, en cas de rupture dudit arbre commun (4) de manière à freiner la turbine (3).

2. Turbomachine selon la revendication 1 dans laquelle l'angle au sommet du cône formé par la virole conique (9) de rotor est inférieur de quelques degrés à l'angle au sommet du cône formé par l'élément structural (17 ; 117) de carter.

3. Turbomachine selon l'une des revendications 1 ou 2, dans laquelle ladite virole conique (9) fait partie intégrante du disque (7) du dernier étage aval du rotor de turbine.

4. Turbomachine selon l'une quelconque des revendications 1 à 3 dans laquelle lesdits bras radiaux (10) du carter d'échappement (5) sont solidaires d'un moyeu (12) sur lequel est fixé du côté amont ledit élément structural conique (17).

5. Turbomachine selon la revendication 4 dans laquelle la pièce amont (13) dudit moyeu (12) de carter d'échappement située en vis-à-vis dudit élément structural (17) comporte une portée cylindrique (16) sur laquelle prend appui une portée cylindrique (19) coopérante de l'élément structural (17) et l'élément structural (17) porte, du côté amont, une bride radiale (18) fixée par vis (21) sur ledit moyeu (12) de carter d'échappement.

6. Turbomachine selon l'une quelconque des revendications 1 à 3 dans laquelle le carter d'échappement (5) comporte des bras radiaux (10) dont la face amont porte une portée cylindrique (22) sur laquelle prend appui une portée cylindrique (116) coopérante de l'extrémité aval dudit élément structural (117) qui porte en outre, du côté amont, une bride radiale (118) qui est boulonnée sur une bride (21) solidaire de la face amont desdits bras (10) de carter.

7. Turbomachine selon l'une quelconque des revendications 1 à 6 dans laquelle les faces (9c, 17a) en regard de la virole conique (9) de rotor de turbine et de l'élément structural (17 ; 117) conique du carter d'échappement sont recouvertes d'un revêtement de type céramique ou carbone présentant de bonnes propriétés de résistance au frottement à hautes températures.

## Patentansprüche

1. Turbotriebwerk, bestehend aus insbesondere einem Kompressor (2) und einer Turbine (3), deren Rotoren auf einer gemeinsamen Welle (4) sitzen, und einem Austrittgehäuse (5) am Turbinenauslaß,
dadurch gekennzeichnet, daß der Turbinenrotor an seinem stromabwärtigen Ende einen konischen Ring (9) aufweist, und daß das Austrittgehäuse (5) stromaufwärtsseitig ein Strukturteil (17, 117) von allgemein konischer Form trägt, das an radialen Armen (10) des genannten Gehäuses (5) befestigt ist, wobei die entsprechenden konischen Teile des genannten Rings (9) des Turbinenrotors und des genannten Strukturteils (17, 117) des Austrittgehäuses bei einem Bruch der genannten gemeinsamen Welle (4) dergestalt in Berührung miteinander kommen, daß sie die Turbine (3) abbremsen.

2. Turbotriebwerk nach Anspruch 1, wobei der Winkel der Spitze des von dem konischen Ring (9) des Rotors gebildeten Kegels um einige Grad kleiner ist als der Winkel der Spitze des von dem Strukturteil (17, 117) der Gehäuses gebildeten Kegels.

3. Turbotriebwerk nach einem der Ansprüche 1 oder 2, wobei der genannte konische Ring (9) in einem Stück mit der Scheibe (7) der letzten stromabwärtigen Stufe des Turbinenrotors ausgeführt ist.

4. Turbotriebwerk nach einem der Ansprüche 1 bis 3, wobei die genannten radialen Arme (10) des Austrittgehäuses (5) fest mit einem Kern (12) verbunden sind, an dem stromabwärtsseitig das genannte konische Strukturteil (17) befestigt ist.

5. Turbotriebwerk nach Anspruch 4, wobei das dem genannten Strukturteil (17) gegenüberliegende stromaufwärtige Teil (13) des genannten Kerns (12) des Austrittgehäuses eine zylindrische Auflagefläche (16) aufweist, an der eine zylindrische Auflagefläche (19) in Anlage kommt, die mit dem Strukturteil (17) zusammenwirkt, und das Strukturteil (17) stromaufwärtsseitig einen radialen Bund (18) trägt, der mittels Schrauben (21) an dem genannten Austrittgehäusekern (12) befestigt ist.

6. Turbotriebwerk nach einem der Ansprüche 1 bis 3, wobei das Austrittgehäuse (5) radiale Arme (10) aufweist, deren stromaufwärtige Seite eine zylindrische Auflagefläche (22) trägt, an der eine zylindrische Auflagefläche (116) in Anlage kommt, die mit dem stromabwärtigen Ende des genannten Strukturteils (117) zusammenwirkt, das des weiteren stromaufwärtsseitig einen radialen Bund (118) trägt, der an einem Bund (21) angeschraubt ist, der mit der stromaufwärtigen Seite der genannten Gehäusearme (10) fest verbunden ist.

7. Turbotriebwerk nach einem der Ansprüche 1 bis 6, wobei die einander gegenüberliegenden Seiten (9c, 17a) des konischen Rings (9) des Turbinenrotors und des konischen Strukturteils (17, 117) der Austrittgehäuses eine Keramik- oder Kohlenstoffbeschichtung aufweisen, die gute Eigenschaften der Reibfestigkeit bei hohen Temperaturen besitzt.

## Claims

1. Turboshaft engine comprising a compressor (2) and a turbine (3) of which the rotors are carried on a common shaft (4) and a tailpipe casing (5) at the outlet of the turbine, characterised in that the turbine rotor comprises at its downstream end a conical shell (9) and in that the tailpipe casing (5) carries on its upstream side a structural element ( 17, 117) of a generally conical shape, fixed to radial struts (10) of the said casing (5), the matching conical parts of the said shell (9) of the turbine rotor and of the said structural element (17, 117) of the tailpipe casing coming into contact in the event of the said common shaft (4) breaking, in such a way as to brake the turbine (3).

2. Turboshaft engine in accordance with Claim 1 in which the angle of the tip of the cone formed by the conical shell (9) of the rotor is less, by a few degrees, than the angle of the tip of the cone formed by the structural element (17, 117) of the casing.

3. Turboshaft engine in accordance with either of Claims 1 or 2, in which the said conical shell (9) forms an integral part of the disc (7) of the final downstream stage of the turbine rotor.

4. Turboshaft engine in accordance with any of Claims 1 to 3 in which the said radial struts (10) of the tailpipe casing (5) form a part of a hub (12) to which on the upstream side is fixed the said conical structural element (17).

5. Turboshaft engine in accordance with Claim 4 in which the upstream part (13) of the said hub (12) of the tailpipe casing situated opposite the said structural element ( 17) comprises a cylindrical extension (16) against which a cylindrical extension (19), working in conjunction with the structural element (17), bears and the structural element (17) carries, on its upstream side, a radial flange (18) fixed by bolts (21) to the said hub (12) of the tailpipe casing.

6. Turboshaft engine in accordance with any of Claims 1 to 3 in which the tailpipe casing (5) comprises radial struts (10) of which the upstream face carries a cylindrical extension (22) against which bears a cylindrical extension (116) working in conjunction with the downstream end of the said structural element (117) which carries, in addition, on the upstream side, a radial flange ( 118) which is bolted to a flange (21) forming part of the upstream face of the said struts (10) of the casing.

7. Turboshaft engine in accordance with any of Claims 1 to 6 in which the faces (9c, 17a) facing the conical shell (9) of the turbine rotor and the conical structural element (17, 117) of the tailpipe casing are covered with a coating of ceramic or carbon type with good frictional properties at high temperatures.
